# DEMANDE DE BREVET EUROPEEN

(11) **EP 2 292 087 A1**
(43) Date de publication de la demande: **09.03.2011**
(21) Numéro de dépôt: 10172716.2
(22) Date de dépôt: 12.08.2010
(51) Int. Cl.: A01G 9/14, A01G 9/20

(54) **Serre à chapelles munies de panneaux solaires**

(30) Priorité: 12.08.2009 FR 0903937; 12.08.2009 FR 0903936
(71) Demandeur: Gastinne, M. Matthieu, 07500 Guilherand Granges (FR)
(72) Inventeur: Gastinne, M. Matthieu, 07500 Guilherand Granges (FR)
(74) Mandataire: Guérin, Jean-Philippe

(57) **Abrégé**

L'invention concerne une serre comprenant plusieurs chapelles adjacentes (2a, 2b, 2c), chaque chapelle comprenant des panneaux solaires (23) et une toiture (21) présentant une première face (22) sensiblement plane dans laquelle les panneaux solaires (23) sont disposés, la toiture (21) étant configurée de sorte que la luminosité au niveau de l'ombre au sol (3) d'une première face pour une illumination selon sa normale soit sensiblement homogène, les ombres au sol de deux premières faces de toitures de chapelles adjacentes étant jointives pour cette illumination.

## Description

L'invention concerne les serres destinées à la production végétale, en particulier les serres dont la toiture est munie de panneaux solaires.

Un nombre croissant de cultures végétales est réalisé à l'intérieur de serres. Les serres sont notamment utilisées pour la culture de blé, de maïs ou de légumes, pour l'arboriculture, la viticulture, l'horticulture ou la sylviculture. Des serres de différentes dimensions sont ainsi construites en fonction des différentes cultures souhaitées. L'utilisation de serres présente un certain nombre d'avantages. Les serres permettent notamment de protéger les végétaux contre les intempéries, les variations climatiques et contre des attaques de nuisibles. Les rendements des récoltes en serre sont ainsi améliorés en limitant l'utilisation de pesticides. Les serres permettent également de réduire l'évaporation de l'humidité et l'érosion du sol induites par le vent. De plus, les serres permettent d'augmenter la période de culture durant l'année. Une telle augmentation de la période de culture permet ainsi de limiter les approvisionnements lointains durant les périodes froides, ce qui est particulièrement adapté à un modèle économique de développement durable. Les serres se présentent généralement sous la forme d'une série d'éléments adjacents appelés chapelles. Une chapelle désigne ainsi une unité de base de la serre, présentant sa propre toiture. Les chapelles présentent ainsi des toitures identiques accolées. Les serres présentent cependant un certain nombre d'inconvénients. Leur prix d'installation en limite fortement la diffusion.

En vue de limiter les émissions de gaz à effet de serre, la production d'énergie renouvelable est en croissance constante. La production d'énergie photovoltaïque connaît notamment un développement fulgurant. Afin de produire une quantité d'électricité importante, des centrales solaires au sol implantées sur de grandes surfaces sont envisagées. Cependant, de telles centrales solaires ont pour unique fonction de produire de l'électricité. Par conséquent, de telles centrales solaires réduisent les surfaces cultivables et ne sont pas correctement intégrées à leur environnement.

Une serre, distribuée sous la référence commerciale Agrisolar, présente une toiture dont une partie est recouverte de panneaux solaires. La serre présente une forme de tunnel délimité par un matériau transparent, le tunnel présentant une base de forme parallélépipédique et une toiture présentant une section en arc de cercle. Sur une partie de la toiture la mieux orientée par rapport au soleil, des panneaux solaires opaques sont fixés et épousent la courbure de la toiture. Une telle serre permet d'exploiter une surface agricole tout en produisant de l'énergie photovoltaïque. Par ailleurs, les panneaux solaires intégrés au toit permettent de bénéficier d'incitations fiscales ou financières dans certains pays.

Une telle serre présente des inconvénients. La disposition des panneaux solaires en arc de cercle induit des problèmes d'étanchéité. Par ailleurs, le rendement de production d'énergie électrique des panneaux n'est pas optimal. Le rapport entre l'énergie produite et la surface au sol occupée par les serres est relativement réduit. En outre, l'illumination des différentes zones sous la serre est hétérogène. En pratique, les végétaux connaissent alors des vitesses de maturation différentes dans les différentes zones de la serre. Cette différence de vitesse de maturation nuit fortement à la gestion et à l'optimisation de la production agricole. De plus, une partie de la serre est soumise au rayonnement solaire direct ce qui induit un rayonnement ultraviolet et une élévation de température néfastes à certaines cultures, par exemple pour celle de la vanille.

Le document DE3919507 décrit une serre tunnel, qui contrairement à des serres à chapelles, est munie d'une unique toiture dont deux bords opposés joignent le sol. Ce document décrit la formation de la toiture au moyen de modules hexagonaux. La toiture est munie de panneaux photovoltaïques. Des passages de lumière sont prévus entre les panneaux. La lumière à l'intérieur de la serre est cependant très concentrée localement et donc très hétérogène. Une telle serre occupe une surface au sol importante, dont une partie non négligeable n'est pas exploitable pour la culture, du fait de la jonction de la toiture avec le sol.

L'invention vise à résoudre un ou plusieurs de ces inconvénients. L'invention porte ainsi sur une serre comprenant plusieurs chapelles adjacentes, chaque chapelle comprenant des panneaux solaires et une toiture présentant une première face sensiblement plane dans laquelle les panneaux solaires sont disposés, la toiture étant configurée de sorte que la luminosité au niveau de l'ombre au sol d'une première face pour une illumination selon sa normale soit sensiblement homogène, les ombres au sol de deux premières faces de toitures de chapelles adjacentes étant jointives pour cette illumination.

Selon une variante, les premières faces présentent une normale formant un angle inférieur à 10° par rapport à l'orientation optimale des panneaux solaires pour la localisation géographique de la serre.

Selon encore une variante, les ombres au sol de deux premières faces de toitures de chapelles adjacentes sont jointives pour une illumination selon l'orientation optimale des panneaux solaires.

Selon une autre variante, les toitures comprennent des deuxièmes faces planes et sensiblement perpendiculaires aux premières faces.

Selon encore une autre variante, les deuxièmes faces sont transparentes.

Selon une variante, les premières et deuxièmes faces sont surélevées par rapport au sol.

Selon une autre variante, la toiture est surélevée par l'intermédiaire de montants communs à deux chapelles adjacentes.

Selon encore une variante, la deuxième face d'une chapelle est surélevée par l'intermédiaire d'un montant disposé dans l'ombre de la première face pour ladite illumination.

Selon encore une autre variante, lesdits panneaux solaires sont joints de façon à former des premières faces étanches.

Selon encore une variante, une chapelle située au niveau d'une première extrémité de la serre présente une paroi s'étendant selon la longueur de sa toiture entre le sol et sa toiture, et dans laquelle une chapelle située au niveau d'une deuxième extrémité de la serre présente une paroi s'étendant selon la longueur de sa toiture entre le sol et sa toiture.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique de côté d'une serre selon un mode de réalisation de l'invention ;
- la figure 2 est une vue schématique de côté d'une chapelle présentant une face de toiture orientée selon une orientation non optimale ;
- la figure 3 est une vue schématique de côté d'une variante de serre.

L'invention propose une serre présentant plusieurs chapelles adjacentes. Chaque chapelle est munie de panneaux solaires et d'une toiture. Chaque toiture présente une première face plane dans laquelle les panneaux solaires sont disposés. La toiture est configurée pour que la luminosité au niveau de l'ombre au sol de la première face pour une illumination selon sa normale soit sensiblement homogène. Pour cette illumination, les ombres au sol des premières faces de toitures adjacentes sont jointives.

Ainsi, on peut obtenir une illumination homogène et continue quasiment pour l'ensemble de la serre. On peut ainsi garantir une maturation homogène de l'ensemble des végétaux cultivés sous la serre. La gestion des plantations et des récoltes peut être grandement facilitée puisque l'ensemble des végétaux de même type arrive à maturation simultanément. La planification du renouvellement des plantations est également grandement facilitée.

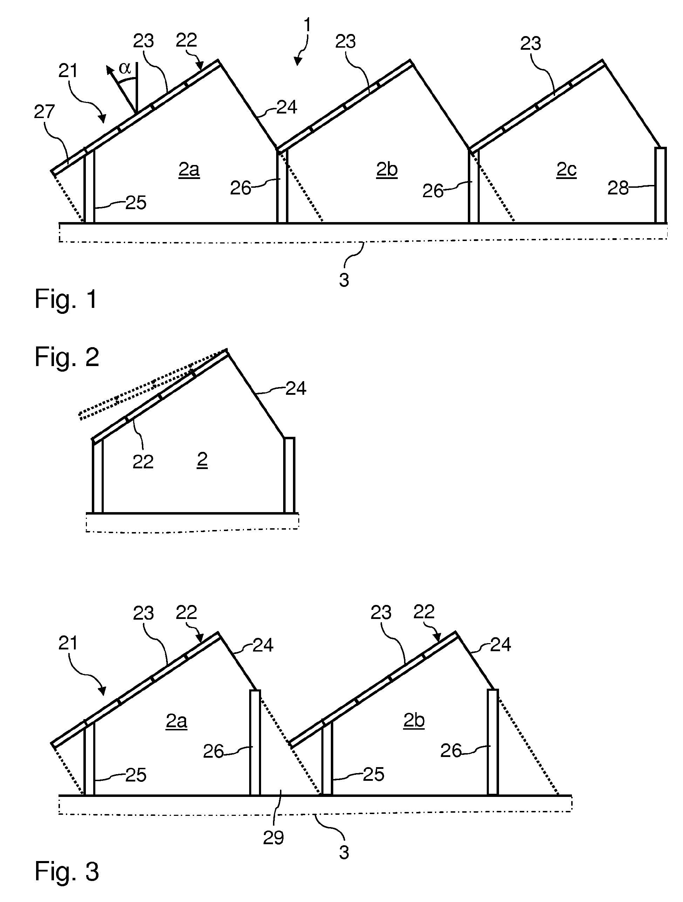

La figure 1 est une représentation schématique d'un mode de réalisation d'une serre 1 selon l'invention. La serre 1 comprend plusieurs chapelles 2a, 2b et 2c adjacentes. Une chapelle est l'unité de base d'une serre, chaque chapelle présentant sa propre toiture. Chaque chapelle est ainsi munie d'une toiture 21. Une toiture 21 présente une première face 22 et une deuxième face 24 inclinées par rapport à l'horizontale. Les faces 22 sont sensiblement planes et leur normale forme un angle α par rapport à la verticale.

Chaque chapelle présente des panneaux solaires photovoltaïques 23. Les panneaux solaires 23 sont disposés dans la première face 22. La présence de panneaux solaires 23 dans la toiture 21 permet de générer de l'électricité, pouvant par exemple être revendue et distribuée sur le réseau électrique public afin d'optimiser la rentabilité de la serre 1. En intégrant les panneaux solaires 23 dans la toiture 21 d'une chapelle, le propriétaire de la serre 1 peut bénéficier d'incitations fiscales ou financières dans certains pays.

Les toitures 21 et en particulier les premières faces 22 sont configurées pour obtenir une luminosité homogène au niveau de leur ombre au sol 3 pour une illumination selon la normale aux premières faces 22. L'homme du métier sait de façon connue en soi concevoir une face de toiture 22 telle que la luminosité soit homogène au niveau de son ombre au sol selon un angle d'illumination donné. Une telle conception est d'autant plus aisée que les premières faces sont planes. Une telle homogénéité peut être obtenue en utilisant des panneaux solaires 23 munis de cellules solaires espacées par des bandes transparentes. Le rapport de surface entre les cellules solaires et les bandes transparentes peut par exemple être d'environ 50%. Les bandes transparentes pourront présenter une largeur adéquate pour diffracter la lumière en direction du sol 3. En éloignant la toiture 22 suffisamment du sol 3 (par exemple de plus de 4 mètres) avec des bandes suffisamment fines, on obtient une illumination au sol homogène. L'illumination peut également être homogène du fait du déplacement du soleil durant la journée. Les toitures 21 seront par exemple configurées pour obtenir des différences de luminosité au sol inférieure à 20% à l'intérieur de la serre pour une illumination selon la normale aux premières faces 22. Une telle homogénéité pourra aisément être vérifiée par l'homme du métier en disposant différents capteurs de luminosité au sol lors de la configuration de la toiture.

Une homogénéité de l'illumination au sol 3 peut également être obtenue en utilisant des panneaux solaires 23 dits à couche mince ou à silicium amorphe. Ces panneaux solaires peuvent présenter un coefficient de transparence approchant les 1 à 15%. Ces panneaux solaires seront avantageusement jointifs. Les panneaux solaires participent ainsi à la fois à la production d'électricité et à l'homogénéisation de la lumière dans la serre.

Une homogénéité de l'illumination au sol 3 peut également être obtenue en utilisant une première face 22 opaque avec une illumination indirecte par l'intermédiaire d'une face 24 transparente.

Pour une illumination selon la normale aux premières faces 22, les ombres portées au sol 3 par des premières faces de toitures adjacentes sont jointives. Ainsi, une illumination homogène et continue est assurée pour les différentes chapelles. De plus, une partie de l'ombre au sol d'une première face 22 bénéficie ainsi à une chapelle adjacente. La surface de culture de la serre 1 est ainsi optimisée.

Les faces 22 présentent sensiblement le même angle α par rapport à la verticale. Les faces 22 sont globalement orientées en direction de l'orientation optimale pour la production d'électricité par ses panneaux solaires 23. Pour des raisons constructives, l'orientation des faces 22 pourra différer par rapport à cette orientation optimale. La figure 2 illustre une chapelle dont la première face 22 présente une orientation différente de cette orientation optimale. La face en pointillés représente une face orientée selon cette orientation optimale.

Cette orientation forme avantageusement un angle inférieur à 10° par rapport à l'orientation optimale d'un panneau solaire pour la localisation géographique de la serre 1. Une telle orientation permet d'optimiser la récupération d'énergie solaire par la serre 1 sur l'ensemble de l'année. L'homme du métier peut déterminer de façon connue en soi cette orientation optimale en fonction de la localisation de la serre et du type de panneaux solaires utilisé. Le site internet http://ines.solaire.free.fr/pvreseau 1.php fournit notamment un module de calcul de l'énergie annuelle générée en fonction de paramètres très précis des panneaux photovoltaïques, permettant de déterminer leur inclinaison optimale. La commission européenne a également mis à disposition un site Internet à l'adresse :
http://re.jrc.ec.europa.eu/pvgis/apps/pvest.php?lang=fr&map=europe&ap p=gridconnected
dans lequel une orientation optimale des panneaux photovoltaïques peut être déterminée en fonction de nombreux paramètres, et ce en tout endroit du monde.

Avantageusement, les toitures 21 sont également configurées pour que les ombres au sol de deux premières faces de toitures adjacentes soient jointives pour une illumination selon l'orientation optimale des panneaux solaires 23.

En utilisant des premières faces 22 présentant un coefficient de transparence suffisamment faible, par exemple inférieur à 70 %, on peut à la fois limiter les variations de température et limiter l'entrée de rayonnement ultraviolet à l'intérieur de la serre 1. Une protection des végétaux est ainsi assurée. En utilisant des premières faces 22 présentant un coefficient de transparence suffisamment élevé, par exemple supérieur à 10 %, on garantit une illumination suffisante pour favoriser la pousse des végétaux placés dans la serre 1.

Les deuxièmes faces 24 sont avantageusement planes. Les deuxièmes faces 24 sont également de préférence transparentes, afin de permettre une entrée complémentaire de lumière dans la serre 1. Les deuxièmes faces 24 sont sensiblement perpendiculaires aux premières faces 22, ou sont parallèles à l'orientation optimale des panneaux solaires 23 (l'orientation optimale est définie par une direction normale aux panneaux solaires pour cette production d'électricité optimale). Les deuxièmes faces 24 permettent ainsi d'introduire un rayonnement lumineux indirect dans la serre 1, qui accroît et homogénéise la luminosité au sol. De plus, une telle disposition des deuxièmes faces 24 permet de ne pas gêner la réception du rayonnement solaire sur les panneaux solaires 23 d'une toiture adjacente. Pour homogénéiser davantage la luminosité au sol, les deuxièmes faces 24 sont avantageusement translucides.

Les panneaux solaires 23 peuvent être assemblés pour former une partie de la toiture 21 et assurer son étanchéité. Les panneaux solaires 23 peuvent également être superposés au-dessus d'une paroi étanche de préférence transparente. Les panneaux solaires 23 recouvriront de préférence quasiment l'intégralité des premières faces 22, afin d'optimiser le rapport de surface de panneaux solaires par rapport à la surface occupée au sol.

Une première face 22 plane facilite l'intégration de panneaux solaires, et permet d'orienter l'ensemble de ces panneaux solaires selon une orientation favorable. Par ailleurs, une première face 22 plane permet de faciliter la réalisation d'une toiture étanche en présence des panneaux solaires 23.

Pour faciliter la récolte des végétaux et augmenter la surface utile à l'intérieur de la serre 1, les toitures 21 sont avantageusement surélevées par rapport au sol 3. Chaque toiture 21 peut présenter ses propres montants de surélévation. Dans l'exemple illustré, les chapelles 2a et 2b, et 2b et 2c présentent des montants communs 26 pour assurer la surélévation de leurs toitures 21. L'homme du métier déterminera la hauteur de surélévation en fonction du type de culture qui doit être disposé dans la serre, par exemple pour permettre l'utilisation d'appareils mécanisés ou permettre une pousse suffisante des végétaux.

Bien que la deuxième face 24 des toitures puisse s'étendre jusqu'au sol 3, la deuxième face est avantageusement surélevée par rapport au sol de sorte qu'une hauteur de travail minimale soit garantie dans l'ensemble de la serre 1.

Des montants 25 et 28 sont disposés au niveau des chapelles d'extrémité. Des parois de préférence transparentes non illustrées s'étendent selon la longueur de la serre 1 au niveau des montants 25 et 28 afin de permettre l'isolation du volume intérieur de la serre 1 par rapport à l'extérieur. Des parois de préférence transparentes pourront également être disposées au niveau des extrémités longitudinales de la serre 1. Les montants 26 et 28 sont disposés dans l'ombre portée d'une première face 22 selon une illumination normale à cette première face. Ainsi, chaque chapelle participe à l'homogénéité de la luminosité dans la chapelle qui lui succède. Les montants 26 peuvent être répartis sur la longueur de la serre 1. On peut également envisager que les toitures 21 soient surélevées par l'intermédiaire de parois de séparation porteuses, de préférence transparentes, disposées entre les chapelles. Les chapelles 2a, 2b et 2c peuvent être en communication ou présenter des parois de séparation s'étendant selon leur longueur au niveau des montants 26.

Les montants illustrés sont verticaux. Cependant, on peut également prévoir d'utiliser des montants de surélévation inclinés, par exemple pour des raisons esthétiques ou pour améliorer la résistance à certains efforts appliqués sur la toiture.

Des ouvrants non illustrés pourront être aménagés au niveau des premières et deuxièmes faces, afin de permettre une aération de la serre 1 ou une intervention sur la toiture 21.

Dans l'exemple illustré à la figure 1, la chapelle 2a est une chapelle d'extrémité. L'extrémité de la chapelle 2a ne bénéficiant pas de l'ombre portée par la toiture d'une autre chapelle, sa première face 22 est munie d'un panneau solaire 27 de prolongation. Le panneau solaire 27 est en saillie par rapport au montant 25, de sorte que l'ombre du panneau solaire 27 selon la normale à la première face 22 inclut l'intégralité du montant 25.

La figure 3 illustre une variante de serre 1. Dans cette variante, les chapelles 2a et 2b sont indépendantes. La première face 22 est surélevée par l'intermédiaire d'un montant 25, tandis que la deuxième face 24 est surélevée par l'intermédiaire d'un montant 26. La bordure avant de la face 22 de la chapelle 2b est disposé dans l'ombre de la face 22 de la chapelle 2a projetée selon une illumination qui lui est perpendiculaire. Un espace 29 est ménagé entre ces chapelles. L'espace 29 facilite l'accès aux toitures 21, un passage étant ménagé entre la face 24 et la face 22 des toitures adjacentes. Le sol de l'espace 29 est également disposé dans l'ombre projetée par la face 22 de la chapelle 2a. Le sol de l'espace 29 bénéficie ainsi également de la même luminosité que l'intérieur des chapelles 2a et 2b.

## Revendications

1. Serre (1), **caractérisée en ce qu'**elle comprend plusieurs chapelles adjacentes (2a, 2b, 2c), chaque chapelle comprenant des panneaux solaires (23) et une toiture (21) présentant une première face (22) sensiblement plane dans laquelle les panneaux solaires (23) sont disposés, la toiture (21) étant configurée de sorte que la luminosité au niveau de l'ombre au sol (3) d'une première face pour une illumination selon sa normale soit sensiblement homogène, les ombres au sol de deux premières faces de toitures de chapelles adjacentes étant jointives pour cette illumination.

2. Serre selon la revendication 1, dans laquelle les premières faces (22) présentent une normale formant un angle inférieur à 10° par rapport à l'orientation optimale des panneaux solaires (23) pour la localisation géographique de la serre (1).

3. Serre selon la revendication 2, dans laquelle les ombres au sol de deux premières faces de toitures de chapelles adjacentes sont jointives pour une illumination selon l'orientation optimale des panneaux solaires (23).

4. Serre selon l'une quelconque des revendications précédentes, dans laquelle les toitures (21) comprennent des deuxièmes faces (24) planes et sensiblement perpendiculaires aux premières faces (22).

5. Serre selon la revendication 4, dans laquelle les deuxièmes faces (24) sont transparentes.

6. Serre selon l'une quelconque des revendications précédentes, dans laquelle les premières (22) et deuxièmes (24) faces sont surélevées par rapport au sol (3).

7. Serre selon la revendication 6, dans laquelle la toiture (21) est surélevée par l'intermédiaire de montants communs (26) à deux chapelles adjacentes (2a, 2b,2c).

8. Serre selon la revendication 6 ou 7 dans laquelle la deuxième face (24) d'une chapelle est surélevée par l'intermédiaire d'un montant (26) disposé dans l'ombre de la première face (22) pour ladite illumination.

9. Serre selon l'une quelconque des revendications précédentes, dans laquelle lesdits panneaux solaires (23) sont joints de façon à former des premières faces étanches.

10. Serre (1) selon l'une quelconque des revendications précédentes, dans laquelle une chapelle (2a) située au niveau d'une première extrémité de la serre (1) présente une paroi s'étendant selon la longueur de sa toiture entre le sol et sa toiture, et dans laquelle une chapelle (2c) située au niveau d'une deuxième extrémité de la serre (1) présente une paroi s'étendant selon la longueur de sa toiture entre le sol et sa toiture.
